# EUROPEAN PATENT APPLICATION

(11) **EP 1 469 662 A1**
(43) Date of publication of application: **20.10.2004**
(21) Application number: 04009015.1
(22) Date of filing: 15.04.2004
(51) Int. Cl.: H04M 3/53, H04M 11/08, H04M 3/533, H04H 1/00

(54) **TV broadcasting of voice/video telephone messages**

(30) Priority: 15.04.2003 GB 0308792
(71) Applicant: 4D Telecom, London SW18 4JB (GB)
(72) Inventor: Bradbury, Chris, Barner, London SW13 0LD (GB)
(74) Representative: Rummler, Felix Dipl. Ing.

(57) **Abstract**

There is provided a message broadcasting system comprising: receiving means for receiving a telephone message from a caller; recording means for recording said telephone message; retrieval means for retrieving said telephone message from said recording means; signal generating means for generating a signal representative of the retrieved telephone message; and signal transmitting means for transmitting the generated signal for broadcasting and receipt by a television system to replay the telephone message. In the context of dating services, this system increases the possible interaction and involvement of participating users by allowing them to broadcast their messages while being on the telephone. In particular, the broadcast signal may be a television signal representative of the telephone message.

## Description

The present invention relates to a method of broadcasting a telephone message, and a message broadcasting system.

Telephone-based dating "chatlines" are known which allow callers to record personal messages and to listen to other callers' recorded personal messages. If one of the messages attracts a caller's interest, he may contact the originator of the message using information included in the recorded message or provided by the chatline operator.

Television-operated dating channels are known which televise information about viewers wishing to date other viewers. Such channels televise information about participating viewers and how to contact them. For example, the television screen may be divided into sections. One section may contain text messages from viewers. Another section may display information on how to get in touch with the originator of one of the displayed text messages. However, since interaction between participants is text message-based, interaction is also remote.

It is also known to televise short videoclips of participants wishing to date. Such videoclips are pre-recorded in advance and replayed according to a predetermined schedule. The participants featured in the video clips are usually not on-line when their video clip is televised. As a consequence, immediate interaction between viewers and people featured in the videoclips is not possible.

The present invention aims to address these disadvantages and to provide a platform for dating which is direct and immediate and more involving than purely telephone-based chatlines.

According to the invention, there is provided a method of broadcasting a telephone message, the method comprising: (a) receiving a telephone message from a caller; (b) recording said telephone message on storage means; (c) retrieving said telephone message from said storage means; (d) generating and broadcasting a signal representative of the retrieved telephone message.

In the context of dating services, this method increases the possible interaction and involvement of participating users by allowing them to broadcast their messages on TV while being on the telephone. The user is thus able to reach a much bigger audience. As a consequence, user satisfaction and the likelihood of repeated use of such service is increased.

In particular, the broadcast signal may be a television signal representative of information including the retrieved telephone message. In the context of a TV-based dating service, the possibility of broadcasting telephone messages allows a more effective use of the television resources available, that is a video and an audio channel.

In an alternative embodiment, the signal is broadcast via the internet to enable replay of the telephone message through a web page.

Preferably, the method comprises the additional steps of prompting the caller to input on his telephone a command indicative of whether or not the telephone message is to be broadcast on TV; and performing steps (c) and (d) depending on the command input by the caller. Accordingly, the user may choose whether or not his message is to be processed for broadcasting.

Steps (a) and (b) may be repeated to receive and record telephone messages from a plurality of callers. Steps (c) and (d) are then preferably repeated on a first come first serve basis in respect of all recorded telephone messages. If some but not all of the recorded messages are user-selected for broadcasting, then steps (c) and (d) are preferably repeated on a first come first serve basis in respect of only those telephone messages selected for broadcasting.

In a preferred embodiment, the method comprises the additional step of allocating the caller an individual user code; and allocating each telephone message from the same caller said individual user code. The allocation of user codes facilitates the management of recorded messages.

In particular, the broadcast signal may be a television signal representative of information including the retrieved telephone message and the allocated user code. The method then comprises the additional step of replaying the retrieved telephone message and displaying the individual user code on a television screen upon receipt of the television signal by the television system's receiver. Accordingly, once the telephone message has been replayed on TV, viewers may get in touch with the originator of the telephone message using the displayed user code. That is, viewers may call a telephone number (also displayed on the TV screen) and enter the user code in order to leave a telephone message for or even speak to the originator of the broadcast telephone message.

Alternatively, the user code may be relayed to the viewer via the television system in other ways, for example by replaying an audio message containing the user code.

In one embodiment, the telephone message is an audio message. That is, use can be made of the TV's audio channel to broadcast messages, in addition to using the TV screen to display text messages.

Alternatively, the telephone message may be a combined audio/video message. For example, use can be made of the video facility of the latest generation of mobile phones to broadcast audio and video messages.

According to another aspect of the invention, there is provided a message broadcasting system comprising: receiving means for receiving a telephone message from a caller; recording means for recording said telephone message; retrieval means for retrieving said telephone message from said recording means; signal generating means for generating a signal representative of the retrieved telephone message; and signal transmitting means for transmitting the generated signal for broadcasting.

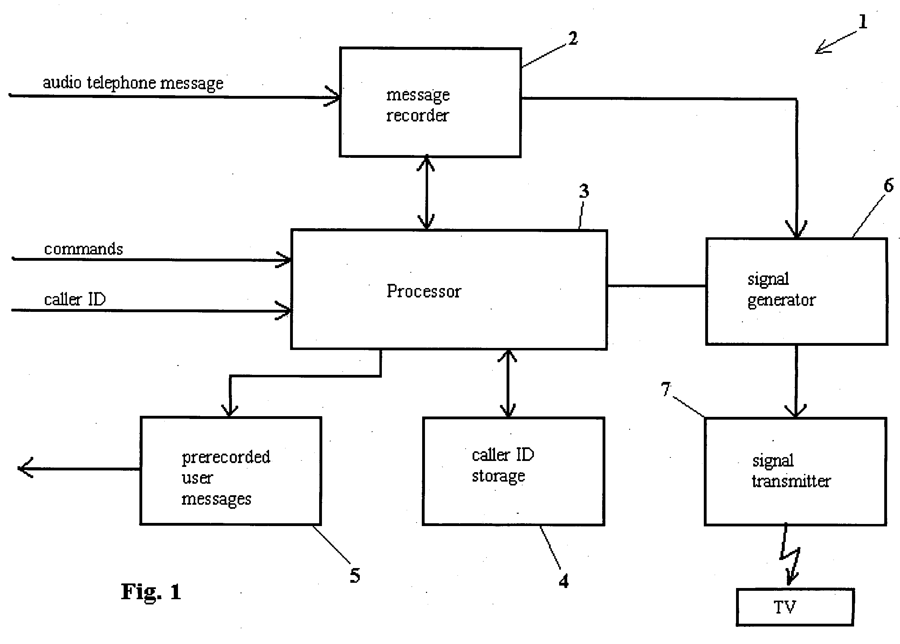

An exemplary embodiment of the invention will now be described by reference to Figure 1.

Figure 1 illustrates a message broadcasting system 1 in accordance with an embodiment of the present invention. The message broadcasting system 1 comprises a message recorder 2 for recording audio telephone messages. The message recorder 2 is connected to a processor 3 which controls the recording and retrieval of messages.

The message recorder 2 allows callers to record a brief greeting message about themselves. The greeting message can be listened to by other callers who access the message broadcasting system 1. Each caller may scroll through and listen to other caller's greeting messages using the telephone keypad. That is, after each greeting message has been played, the caller can choose to move on to the next greeting message or to send that person a message.

Each caller is allocated a user ID. On receipt of an incoming call, the processor 3 determines whether the call originates from a new caller on the basis of the caller's telephone number. If the call originates from a new caller, the processor 3 allocates a user code and stores the telephone number together with the allocated user code in a storage 4. Also, any message recorded by the caller is allocated the user code.

The caller may choose whether he wishes to have his greeting message audio broadcast by TV. The processor 3 causes the caller to be prompted to enter his choice by playing to the caller a pre-recorded prompt message from a prompt message store 5. The caller may then enter a command through his telephone's keypad. Responsive to receipt of the command, the processor 3 allocates information to each recorded audio telephone message indicative of whether or not it is to be broadcast.

When a recorded audio telephone message is to be broadcast, the processor 3 effects retrieval of the message from the message recorder 2, and controls a signal generator 6 to generate a television signal which includes information representative of the audio telephone message to be broadcast and the user code allocated to that message. Also, the processor 3 controls a signal transmitter 7 to broadcast the generated television signal for receipt by a TV receiver.

When the television signal is received by the TV receiver, the audio telephone message is replayed via the TV's audio channel while, at the same time, the allocated user code is displayed in a section of the TV screen.

If a TV viewer wishes to contact or leave a message for the caller associated with the replayed message, he can do so by calling a chatline number also displayed on the TV screen and using the caller's user code. According to an alternative embodiment, the viewer can simply call the chatline and obtain the caller's contact details from an audio menu.

It should be noted that the present invention is not limited to the embodiment described above. It is envisaged that various modifications and variations to the above described embodiment could be made without falling outside the scope of the invention as determined from the claims

## Claims

1. A method of broadcasting a telephone message, the method comprising:
(a) receiving a telephone message from a caller;
(b) recording said telephone message on storage means;
(c) retrieving said telephone message from said storage means;
(d) generating and broadcasting a signal representative of the retrieved telephone message.

2. The method of claim 1, wherein the broadcast signal is a television signal representative of information including the retrieved telephone message, to enable replay of the telephone message on a television system.

3. The method of claim 1, wherein the signal is broadcast via the internet to enable replay of the telephone message through a web page.

4. The method of any preceding claim, comprising:
prompting the caller to input in his telephone a command indicative of whether or not the telephone message is to be broadcast;
performing steps (c) and (d) depending on the command input by the caller.

5. The method of any preceding claim, comprising:
repeating steps (a) and (b) to receive and record telephone messages from a plurality of callers.

6. The method of claim 5, comprising:
repeating steps (c) and (d) on a first come first serve basis in respect of all recorded telephone messages.

7. The method of claim 5 when dependent on claim 4, comprising:
repeating steps (c) and (d) on a first come first serve basis in respect of telephone messages selected for broadcasting by the callers.

8. The method of any preceding claim, comprising:
allocating the caller an individual user code; and
allocating each telephone message from the same caller said individual user code.

9. The method of claim 8, wherein the broadcast signal is a television signal representative of information including the retrieved telephone message and the allocated user code, the method comprising:
replaying the retrieved telephone message and relaying the individual user code via a television system upon receipt of the television signal by the television system's receiver.

10. The method of claim 9, comprising:
displaying the individual user code on said television system.

11. The method of any preceding claim, wherein said telephone message is an audio message.

12. The method of any of claims 1 to 10, wherein said telephone message is a combined audio/video message.

13. A method of operating a telephone chat line, comprising the method of any preceding claim, wherein said signal representative of said telephone message is broadcast while the caller is on the telephone chat line.

14. A message broadcasting system comprising:
receiving means for receiving a telephone message from a caller;
recording means for recording said telephone message;
retrieval means for retrieving said telephone message from said recording means;
signal generating means for generating a signal representative of the retrieved telephone message; and
signal transmitting means for transmitting the generated signal for broadcasting.

15. The message broadcasting system of claim 14, wherein said signal is a television signal representative of information including the retrieved telephone message, to enable replay of the telephone message on a television system.

16. The message broadcasting system of claim 14, wherein said signal is for broadcasting via the internet to enable replay of the telephone message through a web page.

17. The message broadcasting system of any of claims 14 to 16, wherein the telephone message is an audio message.

18. The message broadcasting system of claim 17, wherein the generated signal is a television signal including an audio signal representative of the telephone message.

19. The message broadcasting system of any of claims 14 to 16, wherein the telephone message is an audio/video message.

20. The message broadcasting system of claim 19, wherein the generated signal is a television signal including an audio signal representative of the telephone audio message, and a video signal representative of the telephone video message.

21. The message broadcasting system of any of claims 14 to 20, further comprising:
processing means for allocating the recorded telephone message an individual user ID associated with the caller, and
storage means for storing the user ID.

22. The message broadcasting system of claim 21, wherein said generated signal is representative of information including said user ID for relaying via a television screen.

23. The message broadcasting system of claim 22, wherein said generated signal comprises a video signal representative of information including said user ID for display on a television screen.

24. The message broadcasting system of any of claims 21 to 23, wherein the processing means is arranged to receive from the caller a command indicative of whether or not the telephone message is to be broadcast, and to control the signal generating and transmitting means in accordance with the received command.

25. The message broadcasting system of claim 24, wherein the processing means is arranged to allocate an indicator to the recorded message indicative of whether the message is selected for broadcast, and to store said indicator.

26. The message broadcasting system of any of claims 21 to 25, wherein the receiving and recording means are arranged to receive and record a plurality of telephone messages, and the processing means is arranged to control the signal generating and transmitting means to generate and transmit said signal for those of said plurality of telephone messages selected for broadcasting on a first come first serve basis.
